Europäisches Patentamt

European Patent Office

Office européen des brevets

(19)

(11) Veröffentlichungsnummer: **0 198 312**
**B1**

(12) # EUROPÄISCHE PATENTSCHRIFT

(45) Veröffentlichungstag der Patentschrift:
13.07.88

(21) Anmeldenummer: **86104423.8**

(22) Anmeldetag: **01.04.86**

(51) Int. Cl.⁴: **F 02 D 23/00**, F 02 B 39/12

(54) **Verbrennungsmotor.**

(30) Priorität: **03.04.85 DE 3512281**

(43) Veröffentlichungstag der Anmeldung:
**22.10.86 Patentblatt 86/43**

(45) Bekanntmachung des Hinweises auf die Patenterteilung:
**13.07.88 Patentblatt 88/28**

(84) Benannte Vertragsstaaten:
**AT BE CH DE FR GB IT LI LU NL SE**

(56) Entgegenhaltungen:
**EP - A - 0 074 905**
**DE - A - 3 104 124**
**DE - A - 3 322 171**
**FR - A - 1 364 249**
**US - A - 1 983 225**
**US - A - 2 558 968**
**US - A - 2 818 847**

**PATENTS ABSTRACTS OF JAPAN, Band 7, Nr. 283**
**(M-263)[1428], 16. Dezember 1983; & JP-A-58 158 320**
**(DAIHATSU KOGYO K.K.) 20.09.1983**
**PATENTS ABSTRACTS OF JAPAN, Band 8, Nr. 90**
**(M-292)[1527], 25. April 1984; & JP-A-59 5831 (NIPPON**
**DENSO K.K.) 12.01.1984**

(73) Patentinhaber: **Regar, Karl-Nikolaus, Dr., Rebhuhnweg 3,**
**D-8000 München 60 (DE)**

(72) Erfinder: **Regar, Karl-Nikolaus, Dr., Rebhuhnweg 3,**
**D-8000 München 60 (DE)**

(74) Vertreter: **Sandmann, Joachim, Dr., Hirtenstrasse 19,**
**D-8012 Ottobrunn (DE)**

# Beschreibung

Die Erfindung betrifft eine Antriebsvorrichtung, insbesondere für Kraftfahrzeuge, mit einem Verbrennungsmotor und mit einem von der Motorwelle über einen Drehzahlvariator und über eine Trennkupplung antreibbaren Ladegerät, wobei die in der Ansaugleitung zum Motor angeordnete Drosselklappe durch ein Steuerglied aus der Schliessstellung bis in eine voll geöffnete Betriebsstellung verlagerbar ist und in die Verbindungsleitung vom Ladegerät zum Motor eine Ladedrosseleinrichtung eingebaut ist.

Eine derartige Antriebsvorrichtung ist bereits bekannt (DE-A-3 104 124). Der Drehzahlvariator verhindert, dass mit steigender Motordrehzahl auch die Drehzahl des Laderantriebs entsprechend ansteigt, was zu einer Überladung und zu einer unnötigen Leistungsaufnahme des Ladegeräts führen würde. Die Trennkupplung schafft die Möglichkeit, das Ladegerät ganz abzuschalten und damit auch den Leistungsbedarf im Ladeleerauf einzusparen, wenn wegen des Betriebs- und Belastungszustandes des Motors kein Ladebedarf besteht.

Im übrigen ist der durch das Laden des Verbrennungsmotors erzielbare Vorteil bekannt. Das von einem Verbrennungsmotor wie beispielsweise einem Ottomotor erzeugte Drehmoment weist bei einer bestimmten Motordrehzahl ein Maximum auf und fällt mit steigender wie mit sinkender Drehzahl ab. Insbesondere bei Kraftfahrzeugen wirkt sich das in niedrigen Drehzahlbereichen verminderte Drehmoment nachteilig aus, da die Beschleunigung zu wünschen übrig lässt. Hier setzt das Laden des Verbrennungsmotors ein, wodurch dessen Drehmomentgrösse und insbesondere auch der Drehmomentverlauf über der Motordrehzahl beeinflusst werden. Durch den Ladedruck werden die Brennkammern mit einer gegenüber dem Ansaugebetrieb erhöhten Füllmenge beschickt, was ohne Hubraumvergrösserung zu einer erhöhten Leistung führt.

Von der Motorwelle angetriebene Ladegeräte beanspruchen zwar einen Teil der Motorleistung, haben dafür jedoch gegenüber den bekannten Abgasturboladern den Vorteil, dass sie im wesentlichen ohne Ansprechverzögerung zur Wirkung gebracht werden können. Ausserdem lassen sich mit einem motorgetriebenen Ladegerät bei richtiger Wahl der Vorrichtungskomponenten sowie geschickter Einsatz- und Regelstrategie im Vergleich zum Abgasturbomotor und zum Saugmotor gleicher Leistung erhebliche Krafstoffeinsparungen erzielen.

Die vorstehend beschriebene bekannte Antriebsvorrichtung arbeitet mit einem Ladegerät der Verdrängerbauart (Flügelzellenlader, Rootslader). Solche Verdrängerlader mit einer Volumenförderung haben im Vergleich zu Strömungsladern (Kreiselverdichter) den Nachteil einer höheren Leistungsaufnahme, der eine stärkere Erwärmung der Luft durch Reibungswärme entspricht. Somit muss für eine gleiche Leistung des Motors sowohl höher verdichtet als auch mehr Luft gefördert werden, zwangsläufig zu einer erheblichen Steigerung des spezifischen Krafstoffverbrauchs im Ladebetrieb führt. Wegen der vergleichsweise hohen Ladelufttemperatur wird auch bei der bekannten Antriebsvorrichtung mit einem Ladeluftkühler gearbeitet, was aufwendig ist. Dieser Ladeluftkühler ist einem Beipass zur Ladedrosseleinrichtung zugeordnet, die ohne einen solchen Beipass nicht hinter dem Verdrängerlader angeordnet sein könnte, da es sonst zu schädlichen Überdrücken bei geschlossener Ladedrossel kommen kann.

Ferner wird bei der bekannten Antriebsvorrichtung das Ladegerät in Abhängigkeit von bestimmten Betriebszuständen zugeschaltet, ohne dass eine direkte Abhängigkeit der Zuschaltung bzw. Abschaltung von der Stellung des Steuerglieds bzw. Gaspedals erfolgt. Das kompliziert die Steuerung des Ladegeräts. Auch lässt sich trotz einer entsprechenden Steuerung nicht vermeiden, dass mit dem Zuschalten bzw. Abschalten des Ladegeräts trotz der vorgesehenen Ladedrosseleinrichtung ein Leistungssprung verbunden ist, der sich im Falle eines Kraftfahrzeugs störend für den Fahrer bemerkbar macht, dem insoweit eine feinfühlige Beeinflussung über die Betätigung des Steuerglieds bzw. Gaspedals entzogen ist.

Es ist auch bekannt, für den Verbrennungsmotor eines Kraftfahrzeugs ein Ladegerät der Strömungsbauart in Form eines Kreiselverdichters vorzusehen, der von der Motorwelle über einen Drehzahlvariator mit einem Keilriemen und einer geteilten Riemenscheibe angetrieben wird (US-A-2 828 907). Allerdings ist die Breite der Drehzahlvariation eingeschränkt und der Kreiselverdichter ist nicht abschaltbar. Das vermeidet zwar die vorgenannten Leistungssprünge, erfordert jedoch unnötigerweise Motorleistung zum Antrieb des Kreiselverdichters und ein verlustreiches Abblasen nicht benötigter Ladeluft.

Es ist ferner bekannt, bei einem Verbrennungsmotor für ein Kraftfahrzeug ein abschaltbares Ladegerät vorzusehen, wobei die Zuschaltung bzw. Abschaltung des Ladegerätes mittels einer Trennkupplung in Abhängigkeit von der Stellung des Gaspedals erfolgt (EP-A-0 074 905). Dort erfolgt eine Umschaltung bei einer mittleren Steuergliedstellung. Beim Niedertreten des Gaspedals wird zunächst eine dem Vergaser zugeordnete Drosselklappe bis an einen Anschlag voll aufgesteuert (Saugbetrieb). Bei Erreichen der Anschlagstellung wird ein Mikroschalter betätigt, der die Trennkupplung des Ladegeräts einschaltet. Trotz der erreichten Anschlagstellung lässt sich das Gaspedal infolge einer vorgesehenen Feder weiter niedertreten, wobei eine von der Drosselklappe verschiedene Ladedrossel betätigt wird, um zunehmend Ladedruck zu erzeugen (Ladebetrieb). Dementsprechend lässt sich das zusätzliche Ladedrehmoment mittels des Gaspedals dosieren. Allerdings ist auch hier ein Verdrängerlader vorgesehen, dem ein in die Ansaugleitung vom Luftfilter eingebauter Beipass zugeordnet ist, in den die Ladedrossel eingebaut ist. Diese ist im Saugebetrieb offen und wird im Ladebetrieb mit dem Niedertreten des Gaspedals zunehmend geschlossen, damit der Lader nicht die Luft lediglich durch den Beipass umwälzt sondern ein zunehmender Ladedruck aufgebaut wird. Das Ladegerät wälzt also einen mehr oder minder grossen Anteil der geförderten Luft im Leerlauf um, was entsprechend verlustreich ist. Dabei ist der Leistungsverbrauch des Ladegeräts auch deswegen unnötig gross, weil kein Drehzahlvariator vorgesehen ist, der mit steigendere Motorendrehzahl zu einer kleineren Übersetzung des Laderantriebs führt. Ausserdem hat sich in der Praxis gezeigt, dass die Abschaltung des Verdrängerladers für den Saugbetrieb problematisch ist und zwar wegen des im Vergleich zum Kreiselverdichterlader höheren Massenträgermoments der bewegten Bauteile. Das führt zu einem schnellen Verschleiss der Kupplung und zu einem unannehmbar grossen Schaltstoss.

Der Erfindung liegt die Aufgabe zugrunde, die eingangs beschriebene, wechselweise im Saugbetrieb oder im Ladebetrieb zu fahrende Antriebsvorrichtung aus einem Verbrennungsmotor und einem Ladegerät bei einfacher Bauweise so zu gestalten und zu betreiben, dass sich auch im Ladebetrieb eine insgesamt hohe Leistung bei sparsamem Kraftstoffverbrauch sowie ein glatter Übergang zwischen dem Saugbetrieb und dem Ladebetrieb ergibt.

Diese Aufgabe wird erfindungsgemäss dadurch gelöst, dass das Ladegerät ein Kreiselverdichter ist, dass durch eine erste Teilverstellung des Steuerglieds aus seiner Ausgangsstellung in eine mittlere Umschaltstellung die Drosselklappe bereits in ihre voll geöffnete Stellung verlagert wird, dass die Trennkupplung mit Erreichen der Umschaltstellung im Kupplungssinn betätigt wird und dass die Ladedrosseleinrichtung durch die weitere Teilverstellung des Steuerglieds aus der Umschaltstellung in seine Endstellung aufgesteuert wird, wobei die Rückführung des Steuerglieds in entsprechender Weise zuerst die Ladedrosseleinrichtung und dann nach Erreichen einer mittleren Rückschaltstellung, in der die Trennkupplung im Trennsinn betätigt wird, die Drosselklappe zusteuert und wobei mit der Umschaltung in den Ladebetrieb die Ladeströmung in gegenüber der Drosselung am Ende des Ansaugbetriebs verstärktem Masse gedrosselt und mit der Rückschaltung in den Ansaugbetrieb die Ansaugströmung in gegenüber der Drosselung am Ende des Ladebetriebs verringertem Masse gedrosselt wird.

Die erfindungsgemäss vorgesehene schlagartige Drosseländerung im Umschaltpunkt oder Rückschaltpunkt bzw. beim Zuschalten oder Abschalten des Ladegeräts ist für sich genommen bereits bekannt (FR-A-1 364 249). Dort geht es jedoch nicht darum, einem durch Zuschaltung eines Ladegeräts hervorgerufenen Anstieg der Motorleistung bzw. des Drehmoments zu begegnen, obwohl dort auch ein Verbrennungsmotor mit einem Abgas-Turbolader vorgesehen ist. Der Turbolader wird nämlich kontinuierlich betrieben. Umgeschaltet wird lediglich zwischen dem Betrieb mit einem Zylinder und dem Betrieb mit zwei Zylindern. Um dem Leistungssprung beim Zuschalten des zweiten Zylinders zu begegnen wird die beiden Zylindern zugeordnete gemeinsame Drosselklappe zurückgestellt. Bei einer mittleren Stellung des Gaspedals wird ein Elektromagnet erregt und die Zuschaltung des zweiten Zylinders ausgelöst. Das Gaspedal wirkt auf ein Gestängeglied mit zwei Gelenkpunkten, die durch unterschiedlich starke Federn abgestützt sind, so dass die Pedalbetätigung das Gestänge um den von der stärkeren Feder abgestützten Gelenkpunkt verschwenkt. Dieser wird jedoch beim Zuschalten des zweiten Zylinders vom Elektromagneten vorgezogen, was mit einer Teilrückstellung der Drosselklappe verbunden ist, so dass diese durch weiteres Niedertreten des Gaspedals erneut vollständig aufgesteuert werden kann. Durch diesen Drosselklappensprung soll ein gleichmässiger Anstieg des Drehmoments beim Zuschalten bzw. Abschalten des zweiten Zylinders erreicht werden.

Durch die erfindungsgemässen Massnahmen wird in Abhängigkeit von der Stellung des Steuerglieds bzw. Gaspedals ein zusätzliches Drehmoment durch Ladung des Motors zur Verfügung gestellt, das sich durch ein mehr oder minder starkes Betätigen des Steuerglieds nach Erreichen des Umschaltpunkts dosieren lässt. Von besonderer Wichtigkeit ist dabei, dass im Umschaltpunkt die zusätzliche Ladeleistung nicht schlagartig wirksam wird, weil durch die gegenüber der Ansaugdrosselung im Umschaltpunkt verstärkte Ladedrosselung der Ladedruck zunächst noch weitgehend vom Motor ferngehalten wird. Die mit der Umschaltung ausgelöste Ladedrosselung kann so ausgelegt werden, dass das im Umschaltpunkt einsetzende Drehmoment im Ladebetrieb im wesentlichen gleich ist dem am Ende des Ansaugbetriebs bei Erreichen des Umschaltpunkts erzeugten Drehmoment. Das hat einen glatten Übergang vom Ansaugbetrieb zum Ladebetrieb zur Folge. Im übrigen ist ein begrenzter vergleichsweise geringer Leistungssprung im Umschaltpunkt unschädlich, so dass auf eine alle unterschiedlichen Betriebszustände berücksichtigende Regelung der Ladedrosselung im Umschaltpunkt verzichtet werden kann. Dabei wird dieses Ergebnis mit einem Kreiselverdichter erzielt, der mit vergleichsweise hohem Wirkungsgrad und ohne verlustreiches Abblasen oder Umwälzen von Luft arbeitet. So kann bis zu einem Druckverhältnis des Laders von etwa 2,0 auf ein Ladeluftkühlung verzichtet werden, wobei das Verdichtungsverhältnis des Motors nicht mehr als bei Motoren mit Verdrängerlader oder Abgasturbolader gleicher Leistung reduziert werden muss. Die Temperaturerhöhung der Ladeluft beträgt beim Kreiselverdichterlader maximal 60°C bei einem Druckverhältnis von 1,9. Beim Verdrängerlader hingegen beträgt die Temperaturdifferenz bei gleichem Druckverhältnis je nach Bauart zwischen 90 und 100°C.

Ersichtlich führt die erfindungsgemässe Ausbildung ausser zu Kraftstoffeinsparungen bzw. dem hohen Wirkungsgrad auch noch zu weiteren Vorteilen, beispielsweise hinsichtlich Geräusch- und Abgasemission. Die erfindungsgemäss erreichte vergleichsweise hohe Leistungsdichte erleichtert z.B. auch den Bau von abgasarmen Magermotoren sowie von Dieselmotoren mit geringer Russ- und $NO_x$-Emission.

Die vorstehenden Ausführungen zu den Verhältnissen beim Umschalten in den Ladebetrieb gelten natürlich in entsprechender Weise auch für die Rückschaltung vom Ladebetrieb in den Ansaugbetrieb.

Zweckmässigerweise ist die Rückschaltstellung des Steuerglieds mit dem Übergang in den Ansaugbetrieb gegenüber der Umschaltstellung mit dem Übergang in den Ladebetrieb in Richtung auf die Ausgangsstellung des Steuerglieds versetzt. Diese Versetzung von Umschaltpunkt und Rückschaltpunkt, die durch eine entgegengesetzte Durchlaufrichtung des Steuerglieds unterschieden sind, führt dazu, dass jeder Steuergliedstellung eine eindeutige Betriebsweise, nämlich Ansaugbetrieb oder Ladebetrieb, zugeordnet ist, so dass Probleme durch einen unkontrollierten Mehrfachwechsel des Betriebszustands bei einer praktisch unveränderten Steuergliedstellung ausgeschlossen sind.

In diesem Sinne kann die Umschaltstellung mit dem Übergang in den Ladebetrieb bei einer Steuergliedstellung innerhalb des Bereichs von 55% bis 70% und die Rückschaltstellung in den Ansaugbetrieb innerhalb des Bereichs von 45% bis 60% des bei der Ausgangsstellung beginnenden Gesamtverstellwegs des Steuerglieds liegen. Diese Werte geben zugleich einen Hinweis darauf, in welchem Umfang der eine gewisse Motorleistung verbrauchende Lader zugeschaltet werden sollte, um die erstrebte Anpassung der Motorleistung an die verschiedenen Betriebszustände mit einem sparsamen Kraftstoffverbrauch in Einklang zu bringen, also einen möglichst hohen Wirkungsgrad zu erreichen.

Bei einer zweckmässigen Ausführungsform ist das Ladegerät an die Ansaugleitung angeschlossen und ist die Ladedrosseleinrichtung von der Drosselklappe in der Ansaugleitung gebildet, die durch eine Verstelleinrichtung mit Erreichen der Umschaltstellung aus der offeneren Ansaugstellung in die geschlossenere Ladestellung und mit Erreichen der Rückschaltstellung aus einer geschlosseneren Ladestellung in eine offenere Ansaugstellung verstellt wird. Diese Ausführungsform erweist sich als baulich besonders einfach und hat kaum einen zusätzlichen Platzbedarf. Im übrigen ist es alternativ möglich, im Interesse einer einfachen Bauweise im Saugbetrieb die Saugströmung durch das Ladegerät zu führen, was allerdings zu einer gewissen Drosselung der Ansaugströmung führt, oder aber für den Ansaugbetrieb eine Umgehensleitung zum Ladegerät vorzusehen, die dann beim Übergang in den Ladebetrieb wirkungslos gemacht wird. Diese Ausführungsform der Erfindung ist nicht nur für Benzin- sondern auch für Dieselmotoren vorteilhaft; die Ladedrosseleinrichtung wird dann allerdings überflüssig und das Steuerglied steuert lediglich noch den Übergang zwischen Saug- und Ladebetrieb sowie die Kraftstoff- statt der Gemischmenge.

Bei einer anderen zweckmässigen Ausführungsform ist das Ladegerät über eine von der Ansaugleitung mit der Drosselklappe getrennte die Ladedrosseleinrichtung aufweisende Ladeleitung mit dem Motor verbunden. In diesem Falle sind getrennte Drosselorgane für den Ansaugbetrieb und für den Ladebetrieb vorgesehen, so dass diese beim Umschalten in die andere Betriebsphase (Ladebetrieb bzw. Ansaugbetrieb) in ihrer Endstellung verbleiben können, welche zugleich die Anfangsstellung beim erneuten Übergang in die betreffende Betriebsstellung bildet. Hierdurch kann sich die Drosselung insbesondere im Falle einer mechanischen Steuerung vereinfachen.

Bei parallel in den Motor eingeführter Ansaugleitung und Ladeleitung muss natürlich darauf geachtet werden, dass von der während einer Betriebsart nicht benötigten Leitung keine störende Einwirkung ausgeht. Das gilt insbesonders für die Ansaugleitung während des Ladebetriebs. Aus diesem Grunde ist es sinnvoll, der Ansaugleitung eine mit Erreichen der Umschaltstellung betätigbare Absperreinrichtung zuzuordnen. Diese kann beispielsweise ein vom Ladedruck hinter der Ladedrosseleinrichtung gesteuertes Absperrventil aufweisen.

Die heutzutage bestehenden und auch bei Kraftfahrzeugmotoren bereits eingesetzten Möglichkeiten einer elektronischen Steuerung lassen sich auch im Rahmen der Erfindung sinnvoll nutzen. So ist es vorteilhaft, die Drosselklappe und ggf. die getrennt vorgesehene Ladedrosseleinrichtung mit einem Stellmotor zu versehen und ein elektronisches Steuergerät vorzusehen, das Stellungssignale vom Steuerglied erhält und den oder die Stellmotore sowie die Trennkupplung steuert. Das Steuergerät kann auch weitere den Motorbetrieb charakterisierende Signale beispielsweise von einer in die Motorabgasleitung eingebauten Lambdasonde erhalten und neben der Drosselsteuerung auch die Gemischbildung oder die Kraftstoffeinspritzung regeln, dam it der Motorbetrieb unter möglichst optimalen Bedingungen stattfindet.

Die Vorteile der Erfindung lassen sich bei allen Verbrennungsmotoren nutzen, die für einen Ansaugbetrieb und einen Ladebetrieb in Betracht kommen. Dabei kann es sich sowohl um einen Einspritzmotor wie um einen Vergasermotor handeln. Ein bevorzugtes Anwendungsgebiet der Erfindung betrifft Otto- und Dieselmotoren für den Einbau in Kraftfahrzeuge.

Zwei Ausführungsbeispiele der Erfindung werden nachfolgend anhand einer schematischen Zeichnung näher erläutert. Es zeigen:

Fig. 1 eine Ausbildung mit in die Ansaugleitung eingebautem Lader und einer einzigen stellmotorbetätigten Drosselklappe für Saug- und Ladebetrieb eines Vergasersmotors; und

Fig. 2 eine Ausbildung mit paralleler Ansaugleitung und Ladeleitung mit eigenen vom Gaspedal betätigten Drosseln bei einem Einspritzmotor.

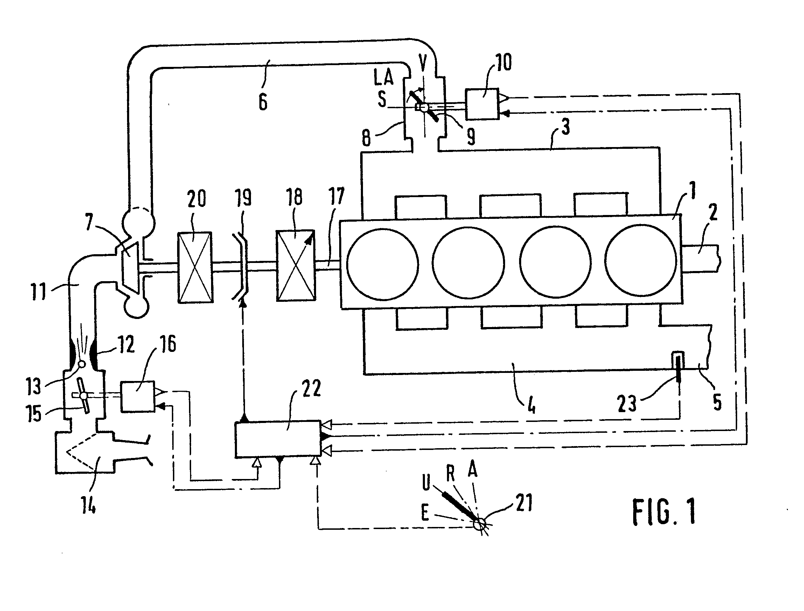

Gemäss Fig. 1 ist ein Motor 1 mit vier Zylindern vorgesehen, von dem die Antriebswelle 2 für den Radantrieb ausgeht. Den Zylindern des Motors 1 ist in bekannter Weise ein Gemischverteiler 3 und ein Abgassammler 4 zugeordnet, an den die Abgasleitung 5 angeschlossen ist.

In den Gemischverteiler 3 mündet die Ansaugleitung 6, in die ein Ladegerät 7 der Kreiselbauart und in Strömungsrichtung dahinter eine Drossel 8 mit einer Klappe 9 eingebaut ist. Die Klappe 9 ist über einen Stellmotor 10 verstellbar.

An den Eingang des Ladegeräts 7 bzw. Kreiselverdichters ist eine Leitung 11 mit einem Vergaser 12 angeschlossen, an dessen Saugöffnung 13 die Benzinzuleitung angeschlossen ist. In Strömungsrichtung vor dem Vergaser 12 sind ein Luftfilter 14 und eine Vorsteuerklappe 15 angeordnet, die über einen Vorsteuerstellmotor 16 verstellbar ist.

Das Ladegerät 7 wird über eine Motorwelle 17 angetrieben, die mit einem Drehzahlvariator 18 verbunden ist. Dieser ist in Form eines Umschlingungsgetriebes ausgebildet, bei dem der wirksame Durchmesser der treibenden und der angetriebenen Riemenscheibe gegensinnig und drehzahlabhängig beispielsweise durch Fliehkraftregelung verstellt werden kann. Der Drehzahlvariator 18 ist abgangsseitig über eine elektromagnetisch betätigbare Trennkupplung 19 mit einem Übersetzungsgetriebe 20 verbunden, das den Läufer des Ladegeräts 7 mit einer gegenüber der Drehzahl der Motorwelle 17 erhöhten Drehzahl antreibt.

Dem Motor 1 ist in bekannter Weise ein Steuerglied in Form eines Gaspedals 21 zugeordnet, dessen jeweilige Stellung über eine Signalleitung einem elektronischen Steuergerät eingegeben wird. Wie dargestellt ist eine in der Abgasleitung 5 angeordnete Lambdasonde 23 über eine weitere Signalleitung mit dem Steuergerät 22 verbunden, das über weitere Signalleitungen zum Fühlen bzw. Verstellen der Stellmotore 10 und 16 mit diesen verbunden ist. Eine weitere vom Steuergerät 22 ausgehende Signalleitung dient der Betätigung der Trennkupplung 19.

Die Anlage gemäss Fig. 1 wird wie folgt betrieben: Bei Beginn des Motorbetriebs befindet sich das Gaspedal 21 in der Ausgangsstellung A und die Klappe 9 in der gemäss Fig. 1 nicht dargestellten waagerechten Schliessstellung S. Die Trennkupplung 19 ist ausgerückt, so dass das Ladegerät 7 nicht angetrieben wird und der Motor 1 nach dem Starten im Saugbetrieb arbeitet. Dabei wird Luft über den Luftfilter 14 angesaugt und im Vergaser 12 ein Gemisch gebildet, das ohne Verdichtungswirkung durch das Ladegerät 7 und die Ansaugleitung 6 zum Motor 1 strömt. Durch Niedertreten des Pedals 21 wird mittels des Steuergeräts 22 und des Stellmotors 10 die Klappe 9 aufgesteuert und dadurch dem Motor 1 in entsprechender Weise Gas gegeben. Dies Ansaugbetrieb wird so lange fortgesetzt, bis das Gaspedal 21 die Umschaltstellung U erreicht, in der das Gaspedal gezeichnet ist und bei der die Klappe 9 ihre voll geöffnete vertikale Vollgasstellung V erreicht hat.

Mit Erreichen der Umschaltstellung U wird gleichzeitig die Klappe 9 schlagartig auf die in Fig. 1 eingezeichnete teilgeöffnete Ladeausgangsstellung LA zurückgesteuert und die Trennkupplung 19 eingerückt, so dass das Ladegerät 7 von der Motorwelle 17 angetrieben wird und nunmehr im Ladebetrieb gearbeitet wird. Das durch Ladung mit beispielsweise 1,4 bar verfügbare zusätzliche Drehmoment wird jedoch nicht wirksam, weil die Klappe 9 in die nur teilgeöffnete Stellung LA zugesteuert wurde, in der die erbrachte Motorleistung im Ladebetrieb die im Ansaugbetrieb mit in der Vollgasstellung V befindlicher Klappe 9 gelieferte Leistung nicht oder nicht wesentlich übersteigt. Dementsprechend wird die zusätzlichen Ladeleistung in Abhängigkeit von der Stellung der Klappe 9 anteilig freigegeben, die durch weitere Verstellung des Gaspedals 21 aus der Umschaltstellung U bis in die Endstellung E aus ihrer Ladeausgangsstellung LA wieder bis in die Vollgasstellung V aufgesteuert wird, in der das maximale Drehmoment bei der jeweiligen Drehzahl erreicht wird, also im Vollast-Ladebetrieb gefahren wird.

Die Rückschaltung vom Ladebetrieb auf den Ansaugbetrieb wird dadurch gelöst, dass das Gaspedal 21 beim Rückgang in Richtung auf die Ausgangsstellung A die Rückschaltstellung R erreicht, was vom Steuergerät 22 wahrgenommen wird. In diesem Rückschaltpunkt wird die Trennkupplung 19 wieder ausgerückt und wird die Klappe 9 aus der Stellung LA bzw. aus einer noch etwas weiter geschlossenen Klappenstellung wieder schlagartig in die Vollgasstellung V zurückgestellt. Auf diese Weise findet auch beim Übergang vom Ladebetrieb in den Ansaugbetrieb ein kontinuierlicher glatter Übergang ohne merklichen Leistungssprung des Motors 1 statt.

Wie dargestellt ist die Rückschaltstellung R gegenüber der Umschaltstellung U in Richtung auf die Ausgangsstellung A versetzt, wodurch jeder Gaspedalstellung eine eindeutige Betriebsart (Ansaugbetrieb oder Ladebetrieb) zugeordnet ist und Minimalverstellungen des Gaspedals 21 im Sinne von Vibrationen nicht zu einem ständigen Umschalten zwischen beiden Betriebsarten führen. Beträgt beispielsweise der Verstellweg des Gaspedals 21 von der Ausgangsstellung A in die Endstellung E 100%, so kann die Umschaltstellung U im Bereich von 60% und die Rückschaltstellung R im Bereich von 50% des Verstellweges von A nach E vorgesehen sein.

Im übrigen sei bemerkt, dass die Vorsteuerklappe 15 in üblicher Weise vom Steuergerät 22 über den Vorsteuer-Stellmotor 16 verstellt wird, um die Gemischbildung in der gewünschten Weise zu beeinflussen.

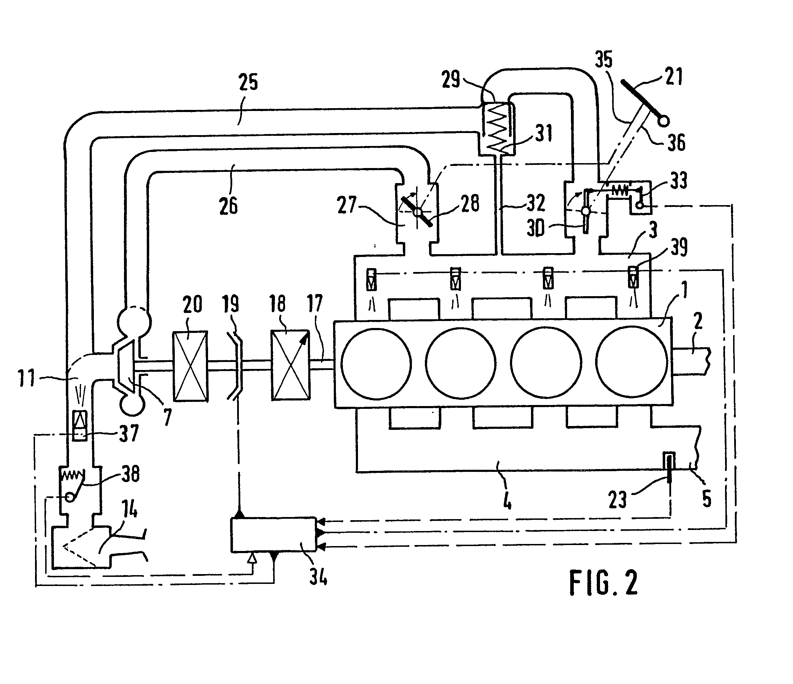

Beim Ausführungsbeispiel gemäss Fig. 2 ist kein Vergasermotor sondern ein Einspritzmotor 1 vorgesehen. Im übrigen sind eine Vielzahl gleicher oder artgleicher Bauteile vorhanden, die mit denselben Bezugsziffern wie in Fig. 1 bezeichnet sind und deswegen nicht mehr erneut beschrieben werden.

Anders als gemäss Fig. 1 ist das Ladegerät 7 in eine von der Ansaugleitung 25 getrennte Ladeleitung 26 eingebaut, die mit einer eigenen Ladedrosseleinrichtung 27 mit Klappe 28 versehen ist. In die Ansaugleitung 25 sind eine von einem Ventil gebildete Absperreinrichtung 29 und eine in Strömungsrichtung nachfolgende Drosselklappe 30 eingebaut. Die Absperreinrichtung 29 ist mittels einer leichten Feder 31 in die dargestellte Schliessstellung vorgespannt. Der im Verteiler 3 herrschende Druck wirkt über ein Druckfühlrohr 32 derart auf die Absperreinrichtung 29 ein, dass durch Unterdruck im Verteiler 3 die Absperreinrichtung 29 unter Überwindung der Kraft der Feder 31 in die geöffnete Stellung übergeht. Dadurch ist sichergestellt, dass die Ansaugleitung 25 im Ansaugbetrieb durchströmbar ist und im Ladebetrieb, in dem sich im Verteiler 3 ein Druck aufbaut, abgesperrt ist.

Der Drosselklappe 30 ist ein Endschalter 33 zugeordnet, der bei Erreichen der dargestellten voll geöffneten Stellung der Drosselklappe 30 betätigt wird und den Schaltvorgang an das Steuergerät 34 weitergibt, das die Trennkupplung 19 betätigt. Die Klappe 28 und die Drosselklappe 30 werden nicht über das Steuergerät 34 sondern über angedeutete mechanische Gestänge 35 bzw. 36 direkt vom Gaspedal 21 betätigt. Dabei entspricht die Darstellung des Gaspedals 21 in Fig. 2 der Umschaltstellung U gemäss Fig. 1, bei der die Drosselklappe 30 die voll geöffnete Stellung entsprechend der Vollgasstellung V und die Klappe 28 die teilgeöffnete Stellung entsprechend der Ladeausgangsstellung LA einnimmt. Die Gestänge 35 und 36 sind so ausgebildet und mit dem Gaspedal 21 verbunden, dass dieses bis in eine Endstellung weiter durchgetreten werden kann, wodurch die Klappe 28 bis in eine voll geöffnete Stellung aufgesteuert wird und die Drosselklappe 30 in der voll geöffneten Stellung verbleibt, bis durch Rückführung des Gaspedals 21 die Rückschaltstellung erreicht ist, in der die Klappe 28 die dargestellte oder eine noch etwas stärker geschlossene Stellung erreicht hat und die Drosselklappe 30 eine anfängliche Schliessbewegung erfährt, die zu einer erneuten Betätigung des Endschalters 33 und damit zu einem Ausrücken der Trennkupplung 19 führt.

Wie dargestellt sind die Ansaugleitung 25 und die Ladeleitung 26 mit dem Ladegerät 7 parallel von der Leitung 11 abgezweigt, in der eine zentrale Einspritzdüse 37 und ein Luftmengenmesser 38 angeordnet sind. Ferner sind im Bereich des Verteilers 3 den einzelnen Zylindern zugeordnete Einzeleinspritzdüsen 39 angeordnet.

Das Steuergerät 34 regelt die Einspritzung des Kraftstoffs in Abhängigkeit vom Mengenmesser 38 und den Messwerten der Lambdasonde 23. Dabei erfolgt die Einspritzung im Ansaugbetrieb über die Einzeleinspritzdüsen, während im Ladebetrieb mit einer zentralen Einspritzung über die Einspritzdüse 37 gearbeitet wird. In diesem Falle wird durch das nachfolgende von der Motorwelle 17 angetriebene Ladegerät 7 eine gute Durchwirbelung bzw. Gemischbildung gewährleistet.

Die Betriebsweise der Anlage gemäss Fig. 2 entspricht derjenigen der Anlage gemäss Fig. 1, wobei wegen der getrennten Klappen 28 und 30 für den Ladebetrieb und für den Saugbetrieb das schlagartige Zusteuern bzw. Aufsteuern einer Klappe im Umschaltepunkt bzw. im Rückschaltpunkt entfällt. Durch die mechanische Kopplung der Klappen 28 und 30 mit dem Gaspedal 21 entfällt auch eine Klappensteuerung mittels des Steuergeräts 34.

**Patentansprüche**

1. Antriebsvorrichtung, insbesondere für Kraftfahrzeuge, mit einem Verbrennungsmotor (1) und mit einem von der Motorwelle (17) über einen Drehzahlvariator (18) und eine Trennkupplung (19) antreibbaren Ladegerät (7), wobei die in der Ansaugleitung (6, 25) zum Motor (1) angeordnete Drosselklappe (9, 30) durch ein Steuerglied (21) aus der Schliessstellung (S) bis in eine voll geöffnete Betriebsstellung (V) verlagerbar ist und in die Verbindungsleitung (6, 26) vom Ladegerät (7) zum Motor (1) eine Ladedrosseleinrichtung (9, 27) eingebaut ist, dadurch gekennzeichnet, dass das Ladegerät (7) ein Kreiselverdichter ist, dass durch eine erste Teilverstellung (A bis U) des Steuerglieds (21) aus seiner Ausgangsstellung (A) in eine mittlere Umschaltstellung (U) die Drosselklappe (9, 30) bereits in ihre voll geöffnete Stellung (V) verlagert wird, dass die Trennkupplung (19) mit Erreichen der Umschaltstellung (U) im Kupplungssinn betätigt wird und dass die Ladedrosseleinrichtung (9, 27) durch die weitere Teilverstellung (U bis E) des Steuerglieds (21) aus der Umschaltstellung (U) in seine Endstellung (E) aufgesteuert wird, wobei die Rückführung des Steuerglieds (21) in entsprechender Weise zuerst die Ladedrosseleinrichtung (9, 27) und dann nach Erreichen einer mittleren Rückschaltstellung (R), in der die Trennkupplung (19) im Trennsinn betätigt wird, die Drosselklappe (9, 30) zusteuert und wobei mit der Umschaltung in den Ladebetrieb die Ladeströmung in gegenüber der Drosselung am Ende des Ansaugbetriebs verstärktem Masse gedrosselt und mit der Rückschaltung in den Ansaugbetrieb die Ansaugströmung in gegenüber der Drosselung am Ende des Ladebetriebs verringertem Masse gedrosselt wird.

2. Antriebvorrichtung nach Anspruch 1, dadurch gekennzeichnet, dass die Rückschaltstellung (R) des Steuerglieds (21) mit dem Übergang in den Ansaugbetrieb gegenüber der Umschaltstellung (U) mit dem Übergang in den Ladebetrieb in Richtung auf die Ausgangsstellung (A) des Steuerglieds (21) versetzt ist.

3. Antriebsvorrichtung nach Anspruch 1 oder 2, dadurch gekennzeichnet, dass die Umschaltstellung (U) mit dem Übergang in den Ladebetrieb bei einer Steuergliedstellung innerhalb des Bereichs von 55% bis 70% und die Rückschaltstellung (R) in den Ansaugbetrieb innerhalb des Bereichs von 45% bis 60% des bei der Ausgangsstellung (A) beginnenden Gesamtverstellwegs des Steuerglieds (21) liegt.

4. Antriebsvorrichtung nach einem der Ansprüche 1 bis 3, dadurch gekennzeichnet, dass das Ladegerät (7) an die Ansaugleitung (6) angeschlossen ist und die Ladedrosseleinrichtung von der Drosselklappe (9) in der Ansaugleitung (6) gebildet ist, die durch eine Verstelleinrichtung (10) mit Erreichen der Umschaltstellung (U) aus der offeneren Ansaugstellung (V) in die geschlossenere Ladestellung (LA) und mit Erreichen der Rückschaltstellung (R) aus einer geschlosseneren Ladestellung in eine offnere Ansaugstellung verstellt wird.

5. Antriebsvorrichtung nach einem der Ansprüche 1 bis 4, dadurch gekennzeichnet, dass das Ladegerät (7) über eine von der Ansaugleitung (25) mit der Drosselklappe (30) getrennte die Ladedrosseleinrichtung (27) aufweisende Ladeleitung (26) mit dem Motor (1) verbunden ist.

6. Antriebsvorrichtung nach Anspruch 5, dadurch gekennzeichnet, dass der Ansaugleiter (25) eine mit Erreichen der Umschaltstellung (U) betätigbare Absperreinrichtung (29) zugeordnet ist.

7. Antriebsvorrichtung nach Anspruch 6, dadurch gekennzeichnet, dass die Absperreinrichtung (29) ein vom Ladedruck hinter der Ladedrosseleinrichtung (27) gesteuertes Absperrventil aufweist.

8. Antriebsvorrichtung nach einem der Ansprüche 1 bis 7, dadurch gekennzeichnet, dass die Drosselklappe (9, 30) und gegebenenfalls die getrennt vorgesehene Ladedrosseleinrichtung (27) mit einem Stellmotor (10) versehen sind und dass ein elektronisches Steuergerät (22) vorgesehen ist, das Stellungssignale vom Steuerglied (21) erhält und den die Stellmotore (10) sowie die Trennkupplung (19) steuert.

**Revendications**

1. Appareil moteur, plus particulièrement pour automobiles, ledit appareil comprenant un moteur à combustion (1) et un suralimenteur (7), capable d'être entraîné par l'arbre de moteur (17) via un variateur de vitesse de rotation (18) et un embrayage de séparation (19), le papillon d'étranglement (9, 30) disposé dans la conduite d'aspiration (6, 25) vers le moteur (1) pouvant être déplacé, par l'intermédiaire d'un organe den commande (21), entre la position fermée (S) et une position de travail (V) entièrement ouverte, et la conduite de communication (6, 26) entre le suralimenteur (7) et le moteur (1) étant équipée d'un dispositif d'étranglement à la suralimentation (9, 27) caractérisé en ce que le suralimenteur (7) est un compresseur centrifuge; que, par un premier déplacement partiel (de A à U) de l'organe de commande (21) à partir de sa position initiale (A) vers une position intermédiaire de changement (U), le papillon d'étranglement (9, 30) est déjà amené dans sa position entièrement ouverte (V); que, au moment de prendre la position de changement (U), l'embrayage de séparation (19) est actionné dans le sens de l'accouplement; et en ce que, par un autre déplacement partiel (de U à E) de l'organe de commande (21) à partir de la position de changement (U) vers sa position finale (E), le dispositif d'étranglement à la suralimentation (9, 27) est ouvert, le retour de l'organe de commande (21) provoquant, d'une manière analogue, la fermeture d'abord du dispositif d'étranglement à la suralimentation (9, 27) et ensuite, après la prise d'une position intermédiaire de remise (R), dans laquelle l'embrayage de séparation (19) est actionné dans le sens de la séparation, celle du papillon d'étranglement (9, 30), et le courant de suralimentation étant restreint, au moment du passage au régime de suralimentation, à un degré plus haut que celui de la restriction pratiquée à la fin du régime d'aspiration, et le courant d'aspiration étant restreint, au moment du retour au régime d'aspiration, à un degré moins haut que celui de la restriction obtenue à la fin du régime de suralimentation.

2. L'appareil moteur selon la revendication 1, caractérisé en ce que la position de remise (R) de l'organe de commande (21) où l'on a le passage au régime d'aspiration, est déplacée par rapport à la position de changement (U) où l'on a le passage au régime de suralimentation, vers la position initiale (A) de l'organe de commande (21).

3. L'appareil moteur selon la revendication 1 ou 2, caractérisé en ce que la position ce changement (U) où l'on a le passage au régime de suralimentation, se situe à une position de l'organe de commande tombant dans la plage allant de 55% à 70% de la course totale de l'organe de commande (21), et que la position de remise (R) au régime d'aspiration se situe dans la plage comprise entre 45% et 60% de ladite course totale, mesurée à partir de la position initiale (A).

4. L'appareil moteur selon l'une quelconque des revendications 1 à 3, caractérisé en ce que le suralimenteur (7) est connecté à la conduite d'aspiration (6), et que le dispositif d'étranglement à la suralimentation est formé par le papillon d'étranglement (9), qui est installé dans la conduite d'aspiration (6) et est déplacé, par un dispositif de commande (10), de la position d'aspiration (V) plus ouverte à la position de suralimentation (LA) plus fermée, lorsque la position de changement (U) est atteinte, et d'une position de suralimentation plus fermée à une position d'aspiration plus ouverte, lorsque la position de remise (R) est atteinte.

5. L'appareil moteur selon une quelconque des revendications 1 à 4, caractérisé en ce que le suralimenteur (7) est connecté au moteur (1) par l'intermédiaire d'une conduite de suralimentation (26) qui est séparée de la conduite d'aspiration (25) munie du papillon d'étranglement (30) et est équipée du dispositif d'étranglement à la suralimentation (27).

6. L'appareil moteur selon la revendication 5, caractérisé en ce que l'on a associé à la conduite d'aspiration (25) un dispositif d'arrêt (29) capable d'être actionné lors de la prise de la position de changement (U).

7. L'appareil moteur selon la revendication 6, caractérisé en ce que le dispositif d'arrêt (29) comprend une soupape d'arrêt, commandée par la pression de suralimentation existant en aval du dispositif d'étranglement à la suralimentation (27).

8. L'appareil moteur selon une quelconque des revendications 1 à 7, caractérisé en ce que le papillon d'étranglement (9, 30) et, le cas échéant, le dispositif d'étranglement à la suralimentation (27), qui est prévu à part, sont équipés d'un servomoteur (10), et qu'il est prévu un appareil de commande électronique (22) qui reçoit des signaux indicateurs de position, venant de l'organe de commande (21), et actionne le(s) servomoteur(s) (10) ainsi que l'embrayage de séparation (19).

**Claims**

1. A drive unit, more particularly for motor cars, with an internal combustion engine (1) and a supercharger (7) capable of being driven by the engine shaft (17) through a rotational speed variator (18) and a disconnect-type clutch (19), the throttle valve (9, 30), which is disposed in the intake line (6, 25) to the engine (1), being movable by a control member (21) between the closed position (S) and a fully open operating position (V), and a boost throttle device (9, 27) being installed in the communication line (6, 26) from the supercharger (7) to the engine (1), characterized in that the supercharger (7) is a centrifugal compressor, that through a first partial displacement (A to U) of the control member (21) from its initial position (A) into an intermediate change-over position (U) the throttle valve (9, 30) is shifted already into its fully opened position (V), that, upon reaching the change-over position (U), the disconnect-type clutch (19) is actuated in the coupling direction, and that, by the further partial displacement (U to E) of the control member (21) from the change-over position (U) into its end position (E), the boost throttle device (9, 27) is opened, whereby resetting the control member (21) in a corresponding manner causes the closure first of the boost throttle device (9, 27) and then, upon reaching an intermediate reset position (R) in which the disconnect-type clutch (19) is actuated in the disconnecting direction, that of the throttle valve (9, 30), and whereby with the shift into the boost mode of operation, the boost flow is restricted to a higher degree than at the end of the induction mode of operation, and with the return into the induction mode of operation, the induction flow is restricted to a lesser degree than at the end of the boost mode of operation.

2. The drive unit according to claim 1, characterized in that the reset position (R) of the control member (21) which sees the shifting into the induction mode of operation, is displaced in relation to the change-over position (U) which sees the shifting into the boost mode of operation, towards the initial position (A) of the control member (21).

3. The drive unit according to claim 1 or 2, characterized in that the change-over position (U), at which the shifting into the boost mode is made, is at a position of the control member falling within 55% to 70% of the total travel of the control member (21), and that the reset position (R) for returning to the induction mode falls within 45% to 60% of said total travel as measured from the initial position (A).

4. The drive unit according to any of the claims 1 to 3, characterized in that the supercharger (7) is connected to the intake line, (6), and that the boost throttle device is formed by the throttle valve (9) in the intake line (9) which is moved by an actuator (10) from the more opened induction position (V) into the more closed boost position (LA), upon reaching the change-over position (U), and from a more closed boost position into a more opened induction position, upon reaching the reset position (R).

5. The drive unit according to any of claims 1 to 4, characterized in that the supercharger (7) is connected to the engine (1) through a boost line (26) which is separate from the intake line (25) with the throttle valve (30) and includes the boost throttle device (27).

6. The drive unit according to claim 5, characterized in that a shut-off device (29) is associated with the intake line (25), said device being actuatable upon reaching the change-over position (U).

7. The drive unit according to claim 6, characterized in that the shut-off device (29) includes a shut-off valve which is controlled by the boost pressure prevailing downstream of the boost throttle device (27).

8. The drive unit according to any of claims 1 to 7, characterized in that the throttle valve (9, 30) and, if necessary, the separately provided boost throttle device (27) are equipped with a servomotor (10), and that an electronic control device (22) is provided which receives position indicating signals from the control member (21) and controls the servomotor(s) (10) as well as the disconnect-type clutch (19).

FIG. 1

0 198 312

FIG. 2

0 198 312